# EUROPÄISCHE PATENTANMELDUNG

(11) **EP 2 626 673 A2**
(43) Veröffentlichungstag der Anmeldung: **14.08.2013**
(21) Anmeldenummer: 13000369.2
(22) Anmeldetag: 24.01.2013
(51) Int. Cl.: G01F 1/58

(54) **Magnetisch induktiver Durchflussmesser**

(30) Priorität: 07.02.2012 DE 102012002202
(71) Anmelder: Sensus Spectrum LLC, Raleigh, NC 27615 (US)
(72) Erfinder: Fesser, Ralf, 67256 Weisenheim am Sand (DE); Mierau, Thomas, 66887 Sankt Julian (DE)
(74) Vertreter: Patentanwälte Dr. Keller, Schwertfeger

(57) **Zusammenfassung**

Die vorliegende Erfindung betrifft einen magnetisch induktiven Durchflussmesser zur Bestimmung des Durchflusses eines durch ein Messrohr (14) hindurchströmenden Fluids, umfassend
- ein Messrohr (14)
- Mittel zur Erzeugung eines Magnetfelds
- zwei gegenüberliegende Messwertaufnehmer (10), die senkrecht zum Magnetfeld an der Wand (12) des Messrohrs (14) angeordnet sind, wobei jeder Messwertaufnehmer (10) eine elektrisch leitfähige Elektrode (20) und eine poröse, elektrisch nicht leitfähige Kappe (18) aufweist und die Kappe (18) zumindest die dem Fluid zugewandte Seite der Elektrode (20) bedeckt,
wobei die Kappe (18) aus einem Material hergestellt ist, das in Bezug auf das durch das Messrohr (14) hindurchströmende Fluid ein geringes Zeta-Potential, insbesondere ein Zeta-Potential von ungefähr Null aufweist.

## Beschreibung

Die vorliegende Erfindung betritt einen magnetisch induktiven Durchflussmesser zur Bestimmung des Durchflusses eines durch ein Messrohr hindurchströmenden Fluids nach dem Oberbegriff des Anspruchs 1.

Magnetisch induktive Durchflussmesser sind bereits seit langem bekannt und basieren auf dem Prinzip der Trennung von geladenen Teilchen in einem Magnetfeld. So verfügt ein magnetisch induktiver Durchflussmesser über ein Magnetfeld senkrecht zur Strömungsrichtung des zu messenden Fluids. Die im Fluid enthaltenen geladenen Teilchen werden durch das angelegte Magnetfeld senkrecht zum Magnetfeld abgelenkt und getrennt. Mit Hilfe von zwei senkrecht zum Magnetfeld angeordneten Messwertaufnehmern lässt sich eine durch die getrennten, geladenen Teilchen hervorgerufene Spannung abgreifen. Die abgegriffene Spannung ist ein Maß für den Durchfluss.

Man unterscheidet hierbei einen galvanischen und einen kapazitiven Signalabgriff. Bei Messwertaufnehmern für einen galvanischen Signalabgriff steht die Elektrode des Messwertaufnehmers in direktem Kontakt mit dem Fluid. Dies hat zur Folge, dass die Elektrode Verschmutzungen und Beschädigungen ausgesetzt ist. So können beispielsweise Sand- oder Rostpartikel, die in einem Fluid wie Wasser enthalten sind, die Elektrodenoberfläche beschmutzen bzw. beschädigen.

Aus diesem Grund wurde in der WO 85/04954 vorgeschlagen, eine Kappe aus einem porösen keramischen Werkstoff, aus Glas oder aus porösem Kunststoff auf der Oberfläche der Messelektrode anzuordnen, so dass zwar das zu messende Fluid bis zur Elektrode vordringen kann, die in einem Fluid enthaltene Partikel jedoch von der Kappe zurückgehalten werden.

Bei der Verwendung von herkömmlichen porösen Keramiken wurde jedoch eine Beeinflussung des Messsignals durch die Keramik festgestellt. Insbesondere wurde ein vergleichsweise hohes Signal-Rausch-Verhältnis beobachtet.

Es ist somit Aufgabe der vorliegenden Erfindung, eine poröse Kappe für eine Elektrode bereitzustellen, die ein geringes Signal-Rausch-Verhältnis aufweist.

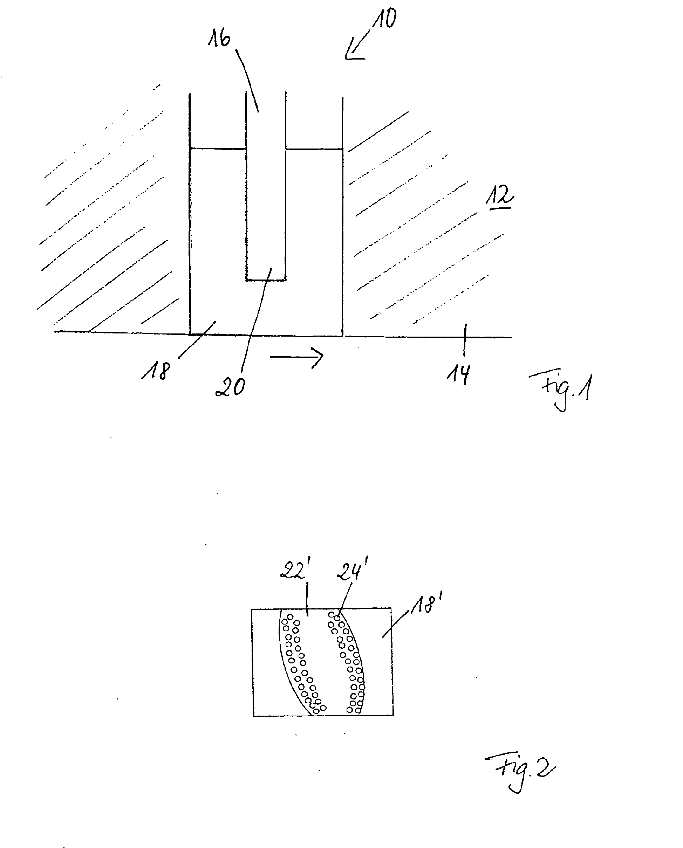

Der Erfindung liegt die Erkenntnis zugrunde, dass das vergleichsweise hohe Signal-Rausch-Verhältnis durch Doppelladungsschichten in den Poren und Kanälen der porösen Kappe verursacht wird. Wie in Fig. 2 dargestellt, lagern sich in den Poren 22' der porösen Kappe 18' Ladungsträger 24' an, die eine Doppelladungsschicht ausbilden. Diese Doppelladungsschicht beeinflusst die zu messenden geladenen Teilchen des Fluids auf ihrem Weg von dem Messrohr durch die keramische Kappe 18' zu der Elektrode. Das Messergebnis wird hierdurch verfälscht.

Erfindungsgemäß wird die oben genannte Aufgabe dadurch gelöst, dass bei einem gattungsgemäßen magnetisch induktiven Durchflussmesser die Kappe aus einem Material hergestellt ist, das in Bezug auf das durch das Messrohr hindurchströmende Fluid ein geringes Zeta-Potential, insbesondere ein Zeta-Potential von ungefähr Null aufweist.

Das Zeta-Potential eines Materials ist abhängig von den Eigenschaften des das Material umgebenden Fluids. So ist das Zeta-Potential eines Materials beispielsweise bei Wasser oder wässrigen Lösungen unter anderem abhängig vom pH-Wert des Wassers bzw. der wässrigen Lösung. Den pH-Wert, bei dem das Zeta-Potential Null ist, bezeichnet man auch als isoelektrischen Punkt (IEP).

Weist das Zeta-Potential in Bezug auf das zu messende Fluid einen Wert von annähernd Null auf, so wird die Ausbildung von Doppelladungsschichten, die die geladenen Teilchen aus dem Fluid auf ihrem Weg von dem Messrohr durch die Kappe bis zur Elektrode beeinflussen können, minimiert. Die von den geladenen Teilchen des Fluids zwischen den beiden Messwertaufnehmern hervorgerufene Spannung beinhaltet ein wesentlich geringeres Signal-Rausch-Verhältnis, so dass dadurch der zu bestimmende Durchfluss besser berechnet, d.h. mit einer höheren Genauigkeit angegeben werden kann.

Wie bereits erwähnt, ist das Zeta-Potential abhängig vom pH-Wert des zu messenden Fluids, wenn es sich bei dem Fluid um Wasser oder eine wässrige Lösung handelt. Wasser weist beispielsweise einen pH-Wert von etwa 6,0 bis 8,5 auf.

Gemäß einer bevorzugten Ausführungsform weist das Zeta-Potential des Materials der Kappe im Bereich des pH-Wertes von 6,0 bis 8,5 einen Wert von ungefähr Null auf, insbesondere liegt der isoelektrische Punkt IEP in dem genannten pH-Wert-Bereich. Diese Materialien sind folglich insbesondere für die Bestimmung des Durchflusses von Fluiden wie Wasser oder wässrigen Lösungen geeignet, die einen pH-Wert von 6,0 bis 8,5 aufweisen.

Bei einer bevorzugten Weiterbildung weist das Zeta-Potential des Materials der Kappe bei einem pH-Wert von 7,0 einen Wert von etwa Null auf bzw. liegt der isoelektrische Punkt des Materials der Kappe bei einem pH-Wert von etwa 7,0.

Weiterhin ist es bevorzugt, dass der Gradient des Zeta-Potentials des Materials der Kappe im Bereich des isoelektrischen Punktes flach ist. Für die Bestimmung des Durchflusses eines Fluids wie Wasser oder eine wässrige Lösung mit einem pH-Wert im Bereich von 6,0 bis 8,5 ist es darüber hinaus bevorzugt, dass der Gradient des Zeta-Potentials des Materials der Kappe im Bereich von einem pH-Wert von 6,0 bis 8,5 flach ist. Hierdurch wirken sich Schwankungen des pH-Werts in dem zu messenden Fluid nur gering auf das Signal-Rausch-Verhältnis aus.

Die Anzahl der angelagerten Ladungsträger an der Oberfläche des porösen Materials ist von seiner inneren Struktur abhängig. Je größer die innere Oberfläche des porösen Körpers ist, desto mehr Ladungsträger können angelagert werden. Je höher das Zeta-Potential des Materials ist, desto mehr Ladungsträger werden angelagert. So führen viele kleine Poren bzw. eine große innere Oberfläche in Verbindung mit einem hohen Zeta-Potential des Materials zu einer vergleichsweise hohen Anzahl an angelagerten Ladungsträgern.

Bei einem porösen Material mit vielen großen Poren besteht jedoch die Gefahr, dass Partikel, die in dem Fluid gelöst sind, durch die Poren hindurch zur Elektrode gelangen können und dort die Elektrode zerstören bzw. an schmalen Durchflussgängen hängen bleiben können, was schließlich zu einer Verstopfung des porösen Materials, d.h. der Kappe führen würde.

Eine hohe offene Porosität des porösen Materials trägt zu einem robusten Messsignal bei. Gemäß einer bevorzugten Ausführungsform weist die Kappe eine offene Porosität ≥ 40 % auf.

Weiterhin ist bevorzugt, dass der Porendurchmesser des Materials der Kappe im Bereich von 6 bis 12 µm, vorzugsweise im Bereich von 8 bis 10 µm liegt. Bei diesem Porendurchmesser können zuverlässig in einem Fluid wie Wasser gelöste Sand- oder Rostteile von der Elektrode ferngehalten werden.

Gemäß einer bevorzugten Ausführungsform ist die Kappe aus einem keramischen Werkstoff hergestellt, beispielsweise aus einer oxidischen Mischkeramik.

Als besonders vorteilhaft hat sich ein Gemisch aus Aluminiumoxid und Siliziumdioxid erwiesen, wobei es bevorzugt ist, dass der Anteil des SiO₂ in dem Gemisch wenigstens 3 %, vorzugsweise wenigstens 6 % beträgt.

Bevorzugte Ausführungsformen der Erfindung werden anhand der beigefügten Zeichnungen näher erläutert, in denen zeigen:
- Figur 1: einen Querschnitt durch einen Messwertaufnehmer eines magnetisch induktiven Durchflussmessers
- Figur 2: einen Querschnitt durch eine Pore einer porösen Kappe

Figur 1 zeigt einen Querschnitt durch einen Messwertaufnehmer 10 eines magnetisch induktiven Durchflussmessers. Der Messwertaufnehmer 10 ist in der Wand 12 eines Messrohrs 14 angeordnet. Ein Fluid fließt in Richtung des dargestellten Pfeils durch das Messrohr 14. Senkrecht zur Strömungsrichtung des Fluids und senkrecht zu dem Messwertaufnehmer 10 verläuft ein nicht dargestelltes Magnetfeld.

Der Messwertaufnehmer umfasst eine elektrisch leitfähige Elektrode 16, beispielsweise aus Silber, und eine poröse, elektrisch nicht leitfähige Kappe 18. Die beispielsweise aus einem keramischen Material hergestellte Kappe 18 ist hülsenartig ausgebildet und bedeckt den Kopf 20 der Elektrode 16. Das keramische Material der Kappe 18 weist in Bezug auf das durch das Messrohr 14 hindurchströmende Fluid ein geringes Zeta-Potential, insbesondere ein Zeta-Potential von ungefähr Null auf.

Geeignete keramische Materialien sind oxidische Mischkeramiken wie etwa aus Aluminiumoxid und Siliziumdioxid.

Die in dem Fluid enthaltenen Ladungsträger werden durch das nicht dargestellte Magnetfeld in Richtung der gegenüberliegenden Messwertaufnehmer 10 abgelenkt und die von dem Magnetfeld abgelenkten, geladenen Teilchen werden von der Elektrode 16 erfasst. Hierbei führt der Weg der geladenen Teilchen von dem Messrohr 14 zu der Elektrode 16 durch die Kappe 18.

Die poröse Kappe 18 dient dazu, die in dem Fluid enthaltenen Fremdpartikel wie etwa Sand oder Rost im Wasser von der Elektrode fernzuhalten und nur die durch das magnetische Feld getrennten Ladungsträger zur Elektrode vordringen zu lassen.

Wird die Fließgeschwindigkeit und somit die Durchflussmenge von Wasser mit einem pH-Wert zwischen 6,0 und 8,5 durch das Messrohr 14 gemessen, so wird gemäß einer bevorzugten Ausführungsform für die Kappe 18 ein Material mit einem Zeta-Potential gewählt, bei dem der isoelektrische Punkt bei einem pH-Wert von etwa 7,0 liegt. Anders ausgedrückt heißt das, dass das Zeta-Potential des Materials bei einem pH-Wert von 7,0 etwa den Wert Null aufweist. Hierbei ist der Gradient des pH-Wert abhängigen Zeta-Potentials des gewählten Materials so gewählt, dass dieser im Bereich von einem pH-Wert von 6,0 bis 8,5 flach ist.

Bei einer solchen Anwendung hat es sich als vorteilhaft herausgestellt, dass das keramische Material eine oxidische Mischkeramik aus Aluminiumoxid (Al₂O₃) und Siliziumoxid (SiO₂) ist, wobei der Anteil des Siliziumdioxids in einem Gemisch aus Aluminiumoxid und Siliziumdioxid wenigstens 3 %, vorzugsweise wenigstens 6 % beträgt.

Die offene Porosität der Kappe ist größer 40 %, und der Porendurchmesser liegt zwischen 6 und 12 µm, vorzugsweise zwischen 8 und 10 µm.

Bei der dargestellten Ausführungsform ist die Kappe 18 hülsenartig ausgebildet, um am Kopf 20 der Elektrode 18 die Stirnfläche und die Seitenflächen zu bedecken. Im Rahmen der Erfindung ist es auch möglich, eine Kappe so auszubilden, dass nur die mit dem Fluid in Verbindung stehende Stirnfläche der Elektrode 18 mit einer Kappe bedeckt ist.

## Patentansprüche

1. Magnetisch induktiver Durchflussmesser zur Bestimmung des Durchflusses eines durch ein Messrohr (14) hindurchströmenden Fluids, umfassend
- ein Messrohr (14)
- Mittel zur Erzeugung eines Magnetfelds
- zwei gegenüberliegende Messwertaufnehmer (10), die senkrecht zum Magnetfeld an der Wand (12) des Messrohrs (14) angeordnet sind, wobei jeder Messwertaufnehmer (10) eine elektrisch leitfähige Elektrode (20) und eine poröse, elektrisch nicht leitfähige Kappe (18) aufweist und die Kappe (18) zumindest die dem Fluid zugewandte Seite der Elektrode (20) bedeckt, **dadurch gekennzeichnet, dass**
die Kappe (18) aus einem Material hergestellt ist, das in Bezug auf das durch das Messrohr (14) hindurchströmende Fluid ein geringes Zeta-Potential, insbesondere ein Zeta-Potential von ungefähr Null aufweist.

2. Magnetisch induktiver Durchflussmesser nach Anspruch 1, **dadurch gekennzeichnet, dass** das durch das Messrohr (14) hindurchströmende Fluid einen pH-Wert im Bereich von 6,0 bis 8,5 aufweist und das Zeta-Potential des Materials der Kappe (18) im Bereich des pH-Wertes von 6,0 bis 8,5 einen Wert von ungefähr Null aufweist.

3. Magnetisch induktiver Durchflussmesser nach Anspruch 1 oder 2, **dadurch gekennzeichnet, dass** das durch das Messrohr (14) hindurchströmende Fluid einen pH-Wert im Bereich von 6,0 bis 8,5 aufweist und der isoelektrische Punkt des Materials der Kappe (18) bei einem pH-Wert von etwa 7,0 liegt.

4. Magnetisch induktiver Durchflussmesser nach einem der vorhergehenden Ansprüche, **dadurch gekennzeichnet, dass** der Gradient des Zeta-Potentials des Materials der Kappe (18) im Bereich des isoelektrischen Punktes flach ist.

5. Magnetisch induktiver Durchflussmesser nach einem der vorhergehenden Ansprüche, **dadurch gekennzeichnet, dass** das durch das Messrohr (14) hindurchströmende Fluid einen pH-Wert im Bereich von 6,0 bis 8,5 aufweist und der Gradient des Zeta-Potentials des Materials der Kappe (18) bezogen auf den pH-Wert im Bereich von 6,0 bis 8,5 flach ist.

6. Magnetisch induktiver Durchflussmesser nach einem der vorhergehenden Ansprüche, **dadurch gekennzeichnet, dass** die Kappe (18) eine offene Porosität größer oder gleich 40% aufweist.

7. Magnetisch induktiver Durchflussmesser nach einem der vorhergehenden Ansprüche, **dadurch gekennzeichnet, dass** der Porendurchmesser des Materials der Kappe (18) im Bereich von 6 bis 12 µm, vorzugsweise in Bereich von 8 bis 10 µm liegt.

8. Magnetisch induktiver Durchflussmesser nach einem der vorhergehenden Ansprüche, **dadurch gekennzeichnet, dass** die Kappe (18) aus einem keramischen Werkstoff hergestellt ist.

9. Magnetisch induktiver Durchflussmesser nach einem der vorhergehenden Ansprüche, **dadurch gekennzeichnet, dass** die Kappe (18) aus einer oxidischen Mischkeramik hergestellt ist.

10. Magnetisch induktiver Durchflussmesser nach Anspruch 9, **dadurch gekennzeichnet, dass** die Kappe (18) aus einem Gemisch aus Al₂O₃ und SiO₂ hergestellt ist,

11. Magnetisch induktiver Durchflussmesser nach Anspruch 10, **dadurch gekennzeichnet, dass** der Anteil des SiO₂ in dem Gemisch wenigstens 3%, vorzugsweise wenigstens 6% beträgt.
